# EUROPEAN PATENT SPECIFICATION

(11) **EP 0 288 173 B1**
(45) Date of publication and mention of the grant of the patent: **01.12.1993**
(21) Application number: 88302965.4
(22) Date of filing: 31.03.1988
(51) Int. Cl.: A01C 23/02

(54) **Ground channeling apparatus**
Einrichtung zum Graben eines Tunnels
Appareil pour creuser des tunnels sous la terre

(30) Priority: 03.04.1987 NZ 219869; 15.05.1987 NZ 220332
(43) Date of publication of application: 26.10.1988
(73) Proprietor: MASSEY UNIVERSITY, Palmerston North (NZ)
(72) Inventor: Baker, Christopher John, RD5 Feilding (NZ); Kernohan, Craig David, Palmerston North (NZ); McDonald, James Hodgson, Longburn (NZ)
(74) Representative: Seaborn, George Stephen

(56) References cited:
- EP-A- 0 056 329
- DE-A- 2 833 744
- DE-C- 3 511 115

## Description

This invention relates to movable apparatus for shallow channelling of the ground. More particularly, it relates to apparatus comprising at least one and preferably a plurality of independent ground channelling and closing means.

Apparatus which cuts a shallow channel in the ground and then feeds a liquid into that channel is well known. commonly there is a cutting wheel or disk which cuts a lead line through the ground surface and is followed by a tine which cuts the shallow channel. Liquid organic or inorganic fertiliser, pesticide, herbicide, or other nutrients and/or seeds, etc. can be fed down into the channel.

The difficulty is that many of the liquid products injected into the ground are volatile so that useful plant nutrients can be lost to the atmosphere in gaseous form. To reduce this problem the depth of injection is therefore substantial, requiring robust and expensive equipment, and nutrients are often placed below the root zone of growing plants.

Further, depending on the porous nature of the soil type and its water content at the time, the volume of liquid which can be injected for any given cross sectional area of soil disturbance created by the machine and for any given distance of forward travel, varies quite markedly.

Apparatus which when combined with an appropriate source of liquid would allow shallow injection of the liquid into the root zone while keeping volatilization to a minimum and allowing independent riding over hard objects and/or allow self-regulated control of depth to prevent fouling of the above-ground vegetation, would be less expensive and of great benefit to the industry, or at least would give the public a useful choice.

EP-A-0 056 329A discloses a machine for burying slurry, sewage, or other soil-improving fluids and which has a hollow straight forward-leaning tine carrying at its bottom end an arched, forward-sloping delta-shaped shoe for lifting the soil into the form of a tunnel. The hollow interior of the tine opens through the roof of this shoe, and slurry is delivered through the tine into the cavity under the shoe. The tine is resiliently loaded by a spring to its working position, and the reaction of the spring is applied directly to a reaction lever separately pivoted on a subframe carrying the tine. The spring reaction biases the lever downwards, and the lever is supported at its rearward end behind the tine by a roller which closes the slit formed by the tapered leading edge of the tine.

DE-C-3 511 115 discloses a device for the introduction of liquid manure from a mobile tank, under pressure, into the earth, using ploughshares mounted on a carrying frame. Tubes conveying liquid manure discharge behind the rear edge of each ploughshare. Disk coulters are mounted in front of the ploughshares and compaction rollers are mounted behind the ploughshares. Both the coulters and the ploughshares are mounted on the carrying frame, which is constituted by a hollow beam. This beam has an inlet for liquid flowing in from the tank and has a multiplicity of outlets. Flexible tubes are attached to the outlets and discharge into the furrows behind the ploughshares.

DE-A-2 833 744 discloses a device for forming a channel in the ground and introducing liquid manure into the channel, the device comprising: a frame serving as a guide for one or more shafts which are pushed into or withdrawn from the soil by a hydraulic cylinder, each shaft carrying a ploughshare at its lower end; a supporting bracket for the shafts, the bracket being pivotally mounted on the frame; a cylinder pivotally mounted on the supporting bracket; and a pump driven by the cylinder and which sucks the manure through a flexible tube and injects it through another flexible tube into a space in the soil created by the passage of the ploughshare.

According to the present invention there is provided ground channelling apparatus comprising:
a frame movable in a direction, hereinafter referred to as "the forward direction," over ground;
a plurality of ground channelling means spaced substantially transversely of the frame relative to the forward direction;
a respective member or assembly connecting each ground channelling means to the frame;
means to control the disposition of said ground channelling means above a flat surface of the ground to provide at least one condition where all of said ground channelling means are at a relatively low level so as to be at least in part below such a flat ground surface in operation of the apparatus and another condition where all of said ground channelling means are at a relatively high level so as to be above such a flat ground surface for transportation of the apparatus;
and ground channel closing means dependent from the frame, and rearwardly, with reference to the forward direction, of the ground channelling means, so as, in use, to close channels which have been formed by said ground channelling means, as the frame advances over the ground, characterised in that:
each said connecting member or assembly includes a leaf spring which trails, with reference to the forward direction, the respective ground channelling means;
said means to control disposition of said ground channelling means comprises a foot member having an arcuate surface and attached to rotatable means carried by the frame and rotatable about an axis extending substantially transversely of the frame relative to the forward direction;
rotation of said rotatable means in one sense causes an increasing proportion of the arcuate surface of the foot to engage with said leaf spring, thereby increasing deflection of the spring when the ground channelling means trailed thereby is subject to an upward force such as when the ground channelling means comes into contact with the ground in operation of the apparatus, to provide a downwardly convex curvature in the spring such that a force with which the ground channelling means, is urged downwardly is increased thereby to increase the force with which the ground channelling means engage the ground in operation of the apparatus; and
the ground channelling means can be lifted upwardly to become clear of the ground by rotation of said rotatable means in the opposite sense for transportation of the apparatus.

Preferably the ground channelling means comprises a ground cutting disc and a channel forming device, which is substantially aligned with the disc and is disposed rearwardly thereof.

Preferably the channel forming device comprises a winged tine which is directed in to said forward direction and wherein increased downwards curvature of the leaf spring causes an angular presentation of the winged tine as measured below the horizontal in a forward direction to increase, thereby to increase its depth of penetration into the ground in operation of the apparatus.

Preferably the ground channel closing means comprises a press wheel, such as a semi-pneumatic wheel.

Preferably the rotatable means comprises a member extending transversely of the frame relative to the forward direction.

Preferably a hydraulic member is connected between the rotatable means and the frame to effect rotation of the tensioning member.

Preferably a slurry or liquid feeding means is associated with each ground engaging means and is disposed to feed liquid or slurry into a channel formed by said means prior to closure of the channel.

Preferably said frame is mounted on carrying wheels.

Alternatively the frame can be transported by a 3-point linkage.

A better understanding of the invention may be obtained by having reference to the accompanying drawings where:
Figure 1 shows the entire apparatus in a preferred embodiment being towed behind a tractor,
Figure 2 shows a detailed perspective view of the ground engaging means of the apparatus, and
Figure 3 shows a detailed perspective view of the tensioning means of the apparatus.

The present invention relates to apparatus for forming channels on or in the ground over which the apparatus is moved in a forward direction. The apparatus is generally towed by a vehicle and is usually associated with a supply of a liquid or slurry to be dispensed.

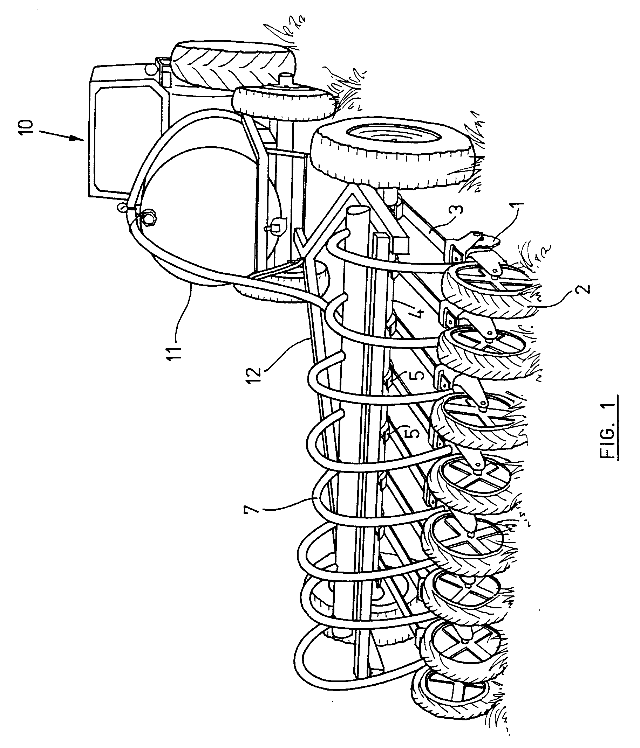

Referring to Figure 1 it is shown that there is a tractor generally indicated 10 towing behind it a mounted drum generally indicated 11 containing slurry or liquid fertiliser. The liquid or slurry is supplied to the apparatus of the invention by associated tubing.

The apparatus of the invention incorporates a frame conveniently mounted on a trailer which is towed behind the tractor. A suitable frame is shown in Figure 1 and designated 12.

The apparatus also includes ground engaging means.

Preferably, eight substantially identical but independent ground engaging means are provided. Each ground engaging means includes ground opening means to open a channel in the ground into which the liquid or slurry can be directed, and ground closing means to close the channel after the application of the liquid or slurry. In the preferred form, the ground opening means comprises both a ground cutting element and a following channel forming device.

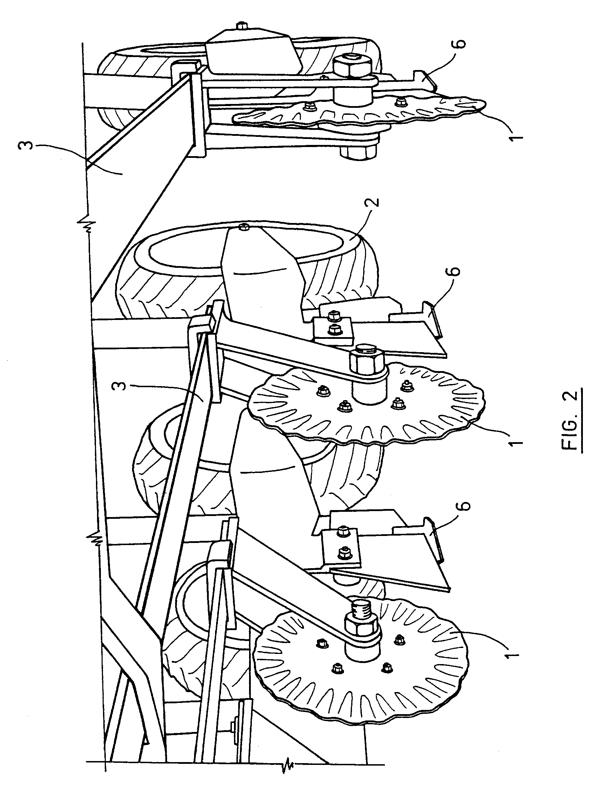

Figure 2 shows more clearly three of the ground engaging means. Each has a ground cutting element in the form of a disc 1 which cuts a lead line through the ground. The channel forming device, which is conveniently a winged tine 6 travels in the line of the disc 1 and cuts a shallow trench of inverted T cross section. Once opened, the slurry is fed into the trench via a tube 7 behind the winged tine 6. To seal the trench the ground closing means, preferably a press wheel 2 runs softly over the ground and closes up the trench.

The ground engaging means are connected to the frame of the apparatus by resilient connecting means. This connection is such that there is a trailing relation between the ground engaging means and the frame when the apparatus is being moved forwards.

The resilient connecting means is capable of preventing substantial lateral movement of the ground engaging means relative to the frame in order to ensure that the desired channels are formed and that the channels, once opened by the ground opening means are closed by the ground closing means. The connecting means is however capable of vertical movement to allow each ground engaging means to be displaced vertically relative to the frame in response to both the contours of the ground over which the apparatus is advancing and any obstacles it encounters on or in the ground. The importance of this feature is described below.

The number of connecting means corresponds to that of the ground engaging means. Accordingly, in the preferred embodiment shown in Figure 1, a total of eight connecting means are provided.

Conveniently, the connecting means is in the form of a spring such as a flat or leaf spring. These springs 3 are shown in both Figures 1 and 2. In particular, Figure 2 shows three of the springs 3 which force the respective ground cutting elements and channel forming devices towards the ground so that a trench is cut.

In addition to the components described above, it is preferred that the apparatus include bias force control means to pre-set the bias-force with which the ground opening means of the engaging means is biased into engagement with the ground. Conveniently, this is achieved by the provision of means to tension the connecting means.

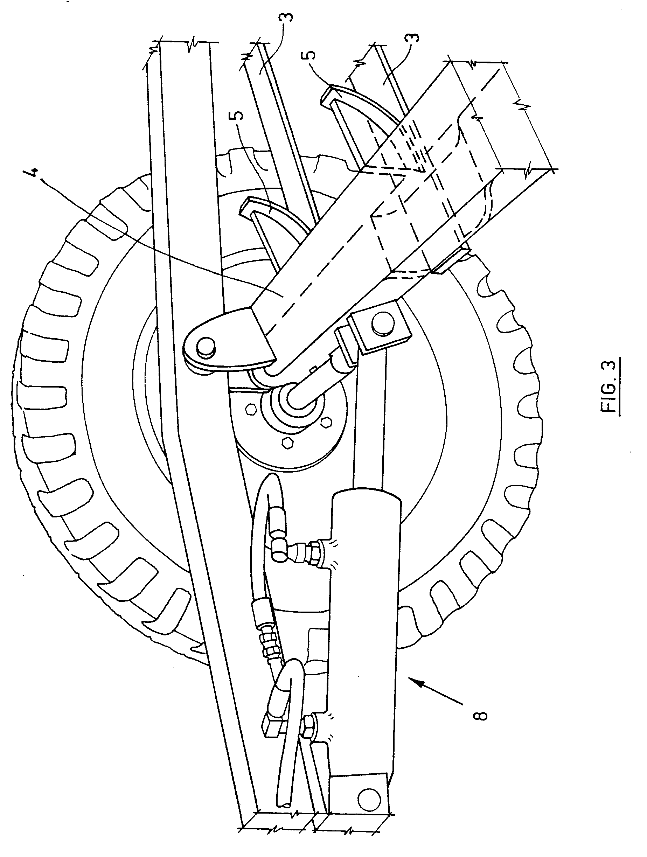

The preferred form of the tensioning means is most clearly shown in Figure 3. As shown the tensioning means includes a tensioning bar 4 which runs perpendicular to the direction of the springs 3. Associated with this tensioning bar 4 is a series of partly circular feet 5, one foot contacting each of the springs 3. Accordingly, when each foot 5 forces its associated spring 3 downwards relative to the frame 12, the force with which the disc 1, the tine 6 and the wheel 2 of each ground engaging means is biased into engagement with the ground is increased.

The presently preferred way in which the movement of the feet 5 is controlled is also as shown in Figure 3. As can be seen there is an hydraulic mechanism generally indicated as 8 which is adjusted by the operator to pre-set the intended depth of penetration of the tines 6 and the degree of curvature of the leaf springs 3. This hydraulic mechanism rotates the tensioning bar 4. As indicated above, by rotating this bar the feet 5 make greater or - lesser contact with the springs 3 which thereby apply greater or lesser forces to the disc 1 and tine 6 to vary the depth of their penetration. At the same time, an increase in force corresponds with an increase in curvature of each spring 3 which is convex to the ground. This in turn increases the angle of the associated tine wings 6 to the horizontal which increases both the volume of the channel and the depth of penetration by angling the associated press wheel 2 upwards. Hard soils which have reduced porosity require greater force, angle of the wings and depth of operation, to both penetrate the ground and create a channel of sufficient volume to receive the liquid without spillage. The device is self-compensating in that with increased pressure applied by the tensioning bar 4 via the leaf springs 3 so as to force the cutting wheels 1 and tines 6 into the ground there is (due to the resultant increased curvature in the springs) a greater penetration angle of the tines which itself aids penetration of hard ground.

The operation of the entire preferred apparatus will now be described. The operator will set the hydraulic means 8 which varies the tensioning bar 4. The particular position of the tensioning bar 4 that will be adopted depends on a number of variables including the amount of slurry that it is desired to inject and the type of ground. In transportation of the apparatus the tensioning bar can be set so that the ground cutting element and channel forming device of the ground engaging means do not contact the ground. However, in operation it is obviously desired that the discs 1 and tines 6 penetrate the ground and it is only the depth of those penetrating elements 1 and 6 and the angle the tine wings 6 make to the horizontal that is at issue. The control is effected as follows:
By rotating the tensioning bar 4 as shown in Figure 3 the pressure applied to the springs 3 is varied. If the tensioning bar 4 was rotated clockwise as shown in Figure 3 the arcuate feet 5 would put greater pressure onto the springs 3 which would then be caused to become more convex relative to the ground because of the resistance of the ground opening elements, tines 6, to ground penetration. This in turn would increase the pitch angle of the wings on the tines 6 and the gross down force on the whole of each tine thus effecting and increasing penetration. The press wheels 2 are resistant to penetration so the tines cannot over penetrate, but curvature of each spring 3 raises the associated press wheel relative to the associated tine thus allowing that tine to penetrate deeper to compensate for hard ground. Of course, by rotating the tensioning bar 4 in the anti-clockwise direction the forces on the springs 3 are lessened and the spring will cause the tines 6 to lift, eventually clear of the ground if it is desired to transport the invention.

Thus the operator sets a pre-determined depth for ground penetration by setting the force with which the ground engaging means is biased to engage the ground. However, in all fields the ground depth varies and there are many rocks, stones, etc. which obviously cannot be carved through. It is not desirable to have the entire eight tines come off the ground merely because one contacts the rocks. The springs are biased towards ground penetration of the cutting disc and the channel forming device but that bias can be overcome by sufficient force. Thus, if a rock is in the path of one particular cutting disc and associated channel forming device then the pressure of the associated spring will be overcome, the particular disc and tine member will ride over the rock, and will come back into ground penetration after the rock has been ridden over but the remaining seven tines will be contacting the ground throughout.

Thus, the present invention provides apparatus which, when associated with a source of the appropriate fertilizer, herbicide or the like in liquid or slurry form allows the fertilizer, herbicide or the like to be applied to the ground without excess volatilization. Further, the independent and resilient mounting of the ground engagement unit results in a capability for delivery of the liquid or slurry which is responsive to the ground conditions over which the liquid or slurry is to be applied.

## Claims

1. Ground channelling apparatus comprising:
a frame (12) movable in a direction, hereinafter referred to as "the forward direction," over ground;
a plurality of ground channelling means (1,6) spaced substantially transversely of the frame (12) relative to the forward direction;
a respective member or assembly (3) connecting each ground channelling means (1,6) to the frame (12);
means (4,5) to control the disposition of said ground channelling means (1,6) above a flat surface of the ground to provide at least one condition where all of said ground channelling means (1,6) are at a relatively low level so as to be at least in part below such a flat ground surface in operation of the apparatus and another condition where all of said ground channelling means are at a relatively high level so as to be above such a flat ground surface for transportation of the apparatus;
and ground channel closing means (2) dependent from the frame (12), and rearwardly, with reference to the forward direction, of the ground channelling means (1,6), so as, in use, to close channels which have been formed by said ground channelling means, as the frame advances over the ground, characterised in that:
each said connecting member or assembly includes a leaf spring (3) which trails, with reference to the forward direction, the respective ground channelling means (1,6);
said means to control disposition of said ground channelling means comprises a foot member (5) having an arcuate surface and attached to rotatable means (4) carried by the frame (12) and rotatable about an axis extending substantially transversely of the frame (1) relative to the forward direction;
rotation of said rotatable means (4) in one sense causes an increasing proportion of the arcuate surface of the foot (5) to engage with said leaf spring (3), thereby increasing deflection of the spring (3) when the ground channelling means (1,6) trailed thereby is subject to an upward force such as when the ground channelling means comes into contact with the ground in operation of the apparatus, to provide a downwardly convex curvature in the spring (3) such that a force with which the ground channelling means (1,6) is urged downwardly is increased thereby to increase the force with which the ground channelling means engage the ground in operation of the apparatus; and
the ground channelling means (1,6) can be lifted upwardly to become clear of the ground by rotation of said rotatable means (4) in the opposite sense for transportation of the apparatus.

2. An apparatus as claimed in Claim 1, wherein each ground channelling means comprises a ground cutting disc (1) and a channel forming device (6), which is substantially aligned with the disk and is disposed rearwardly thereof.

3. An apparatus as claimed in Claim 2, wherein the channel-forming device comprises a winged tine (6) which is directed in said forward direction and wherein increased downwards curvature of the leaf spring (3) causes an angular presentation of the winged tine (6) as measured below the horizontal in a forward direction to increase, thereby to increase its depth of penetration into the ground in operation of the apparatus.

4. An apparatus as claimed in any preceding claim, wherein the ground channel closing means comprise a press wheel (2).

5. An apparatus as claimed in any preceding claim, wherein a hydraulic member (8) is connected between the rotatable means (4) and the frame (12) to effect rotation of the rotatable means.

6. An apparatus as claimed in any preceding claim, wherein a liquid or slurry feeding means (7) is associated with each ground channelling means and is disposed to feed liquid or slurry into a channel formed by said means prior to closure of the channel.

## Patentansprüche

1. Vorrichtung zur Bildung von Bodenkanälen, umfassend
einen in einer im weiteren als "Vorwärtsrichtung" bezeichneten Richtung über den Boden beweglichen Rahmen;
eine Mehrzahl von im wesentlichen quer zu dem Rahmen (12) relativ zu der Vorwärtsrichtung beabstandeten Mitteln (1, 6) zur Bildung von Bodenkanälen;
jeweils ein Element bzw. Bauteil (3) zum Verbinden jedes der Mittel (1, 6) zur Bildung von Bodenkanälen mit dem Rahmen (12);
ein Mittel (4, 5) zur Steuerung der Disposition der genannten Mittel (1, 6) über einer solchen flachen Oberfläche des Bodens, um wenigstens einen Zustand zu erzielen, bei dem sich alle genannten Mittel (1, 6) zur Bildung von Bodenkanälen in einer relativ geringen Höhe befinden, um beim Betrieb der Vorrichtung wenigstens teilweise unterhalb einer flachen Bodenoberfläche zu sein, und einen weiteren Zustand, bei dem sich alle genannten Mittel zur Bildung von Bodenkanälen in einer relativ geringen Höhe befinden, um für den Transport der Vorrichtung oberhalb einer solchen flachen Bodenoberfläche zu sein;
und an dem Rahmen (12) hängende und in bezug auf die Vorwärtsrichtung hinter den Mitteln (1, 6) zur Bildung von Bodenkanälen montierte Mittel (2) zum Schließen von Bodenkanälen, die bei Gebrauch Kanäle schließen, welche durch die genannten Mittel zur Bildung von Bodenkanälen bei der Vorwärtsbewegung des Rahmens über den Boden gebildet werden, dadurch gekennzeichnet, daß
jedes der genannten Verbindungselemente bzw. -bauteile eine Blattfeder (3) beinhaltet, die in bezug auf die Vorwärtsrichtung die jeweiligen Mittel (1, 6) zur Bildung von Bodenkanälen schleppt;
das genannte Mittel zur Steuerung der Disposition der genannten Mittel zur Bildung von Bodenkanälen ein Fußelement (5) mit einer bogenförmigen Oberfläche aufweist, das an von dem Rahmen (12) getragenen, drehbaren Mitteln (4) befestigt und um eine Achse drehbar ist, die im wesentlichen quer zu dem Rahmen (1) relativ zu der Vorwärtsrichtung verläuft;
die Drehung der genannten drehbaren Mittel (4) in einer Richtung den Eingriff eines immer größer werdenden Teils der bogenförmigen Oberfläche des Fußes (5) mit der genannten Blattfeder (3) bewirkt, wodurch die Ablenkung der Feder (3) erhöht wird, wenn die dadurch geschleppten Mittel (1, 6) zur Bildung von Bodenkanälen einer Aufwärtskraft unterworfen werden, wie z.B. dann, wenn die Mittel zur Bildung von Bodenkanälen beim Betrieb der Vorrichtung mit dem Boden in Berührung kommen und so eine abwärts gerichtete konvexe Krümmung in der Feder (3) bewirken, so daß eine Kraft, mit der die Mittel (1, 6) zur Bildung von Bodenkanälen nach unten gedrückt werden, erhöht wird, wodurch die Kraft erhöht wird, mit der die Mittel zur Bildung von Bodenkanälen beim Betrieb der Vorrichtung in den Boden eingreifen; und
die Mittel (1, 6) zur Bildung von Bodenkanälen durch die Drehung der genannten drehbaren Mittel (4) in der entgegengesetzten Richtung für den Transport der Vorrichtung nach oben vom Boden abgehoben werden können.

2. Vorrichtung nach Anspruch 1, wobei jedes der Mittel zur Bildung von Bodenkanälen eine Bodenschneidscheibe (1) und eine Kanalbildungseinrichtung (6) aufweist, die sich im wesentlichen in einer Linie mit der Scheibe befindet und dahinter angeordnet ist.

3. Vorrichtung nach Anspruch 2, wobei die Kanalbildungseinrichtung eine geflügelte Zinke (6) aufweist, die in die genannte Vorwärtsrichtung zeigt, und wobei die erhöhte Abwärtskrümmung der Blattfeder (3) eine Erhöhung der Schrägstellung der geflügelten Zinke (6) unterhalb der Horizontalen in Vorwärtsrichtung bewirkt, wodurch sich beim Betrieb der Vorrichtung dessen Eindringtiefe in den Boden erhöht.

4. Vorrichtung nach einem der vorhergehenden Ansprüche, wobei die Mittel zum Schließen des Bodenkanals ein Druckrad (2) aufweisen.

5. Vorrichtung nach einem der vorhergehenden Ansprüche, wobei zwischen den drehbaren Mitteln (4) und dem Rahmen (12) zur Bewirkung einer Rotation der drehbaren Mittel ein Hydraulikelement (8) eingebaut ist.

6. Vorrichtung nach einem der vorhergehenden Ansprüche, wobei jedem Mittel zur Bildung von Bodenkanälen ein Flüssigkeits- oder Schlammzuführmittel (7) zugeordnet ist, das vor dem Schließen des durch das genannte Mittel gebildeten Kanals Flüssigkeit oder Schlamm in den Kanal speist.

## Revendications

1. Appareil de creusement de rigoles dans le sol, comprenant:
un châssis (12) capable de déplacement dans une direction, ci-après appelée "la direction en avant", au-dessus du sol ;
une pluralité de moyens (1,6) de creusement de rigoles dans le sol, espacés sensiblement de manière transversale au châssis (12) par rapport à la direction en avant ;
un membre ou ensemble (3) respectif raccordant au châssis (12) chaque moyen (1,6) de creusement de rigoles dans le sol ;
un moyen (4,5) pour contrôler la disposition desdits moyens (1,6) de creusement de rigoles dans le sol au-dessus d'une surface plate du sol afin de fournir au moins un état dans lequel tous les moyens (1,6) de creusement de rigoles dans le sol se trouvent à un niveau relativement bas de manière à être au moins en partie en-dessous d'une telle surface de sol plate lors du fonctionnement de l'appareil et un autre état dans lequel tous les moyens de creusement de rigoles dans le sol se trouvent à un niveau relativement haut de manière à être au-dessus d'une telle surface de sol plate pour le transport de l'appareil ;
et un moyen (2) de fermeture de rigoles pendant du châssis (12), et à l'arrière, par rapport à la direction en avant, du moyen (1,6) de creusement de rigoles dans le sol, de manière à, pendant l'utilisation, fermer les rigoles qui ont été formées par lesdits moyens de creusement de rigoles dans le sol, au fur et à mesure que le châssis avance au-dessus du sol, caractérisé en ce que :
chaque dit membre ou ensemble de raccord comporte un ressort à lame (3) qui traîne, par rapport à la direction en avant, le moyen respectif (1,6) de creusement de rigoles dans le sol ;
ledit moyen pour contrôler la disposition desdits moyens de creusement de rigoles dans le sol comprend un membre à pied (5) présentant une surface arquée et attaché à un moyen capable de rotation (4) porté par le châssis (12) et capable de rotation autour d'un axe s'étendant sensiblement de manière transversale au châssis (1) par rapport à la direction en avant ;
la rotation dudit moyen capable de rotation (4) dans un sens provoque l'engagement d'une proportion croissante de la surface arquée du pied (5) avec ledit ressort à lame (3), augmentant ainsi la déflection du ressort (3) lorsque le moyen (1,6) de creusement de rigoles dans le sol traîné par celui-là est soumis à une force ascendante de sorte que lorsque le moyen de creusement de rigoles dans le sol vient en contact avec le sol lors du fonctionnement de l'appareil, pour fournir une courbure convexe descendante dans le ressort (3) de telle sorte qu'une force avec laquelle le moyen (1,6) de creusement de rigoles dans le sol est poussé vers le bas est augmentée pour augmenter ainsi la force avec laquelle le moyen de creusement de rigoles dans le sol engage le sol lors du fonctionnement de l'appareil ; et
le moyen (1,6) de creusement de rigoles dans le sol peut être levé vers le haut pour s'écarter du sol par rotation dudit moyen capable de rotation (4) dans le sens opposé pour le transport de l'appareil.

2. Appareil selon la revendication 1, dans lequel chaque moyen de creusement de rigoles dans le sol comprend un disque à couper le sol (1) et un dispositif de formation de rigoles (6), qui est sensiblement aligné avec le disque et est disposé à l'arrière de celui-ci.

3. Appareil selon la revendication 2, dans lequel le dispositif de formation de rigoles comprend une dent ailée (6) qui est dirigée dans ladite direction en avant et dans lequel la courbure descendante augmentée du ressort à lame (3) provoque l'augmentation d'une présentation angulaire de la dent ailée (6) telle que mesurée en dessous de l'horizontale dans une direction en avant, pour augmenter ainsi sa profondeur de pénétration dans le sol lors du fonctionnement de l'appareil.

4. Appareil selon une revendication précédente quelconque, dans lequel le moyen de fermeture de rigoles dans le sol comprend une roue de compression (2).

5. Appareil selon une revendication précédente quelconque, dans lequel un membre hydraulique (8) est raccordé entre le moyen capable de rotation (4) et le châssis (12) afin d'effectuer une rotation du moyen capable de rotation.

6. Appareil selon une revendication précédente quelconque, dans lequel un moyen d'alimentation (7) en liquide ou en boue liquide est associé à chaque moyen de creusement de rigoles dans le sol et est disposé pour alimenter en liquide ou en boue liquide une rigole formée par ledit moyen avant la fermeture de la rigole.
